Europäisches Patentamt

European Patent Office

Office européen des brevets

(11) Numéro de publication: **0 161 131**
**B1**

(12) **FASCICULE DE BREVET EUROPEEN**

(19)

(45) Date de publication du fascicule du brevet:
**24.06.87**

(21) Numéro de dépôt: **85400532.9**

(22) Date de dépôt: **20.03.85**

(51) Int. Cl.⁴: **B 60 T 11/34,** B 60 T 8/18,
B 60 T 8/26

(54) Dispositif de sécurité sur correcteur de freinage.

(30) Priorité: **28.03.84 FR 8404842**

(43) Date de publication de la demande:
**13.11.85 Bulletin 85/46**

(45) Mention de la délivrance du brevet:
**24.06.87 Bulletin 87/26**

(84) Etats contractants désignés:
**DE GB IT**

(56) Documents cités:
**EP - A - 0 033 690**
**FR - A - 2 383 048**
**FR - A - 2 493 782**
**GB - A - 2 130 322**

(73) Titulaire: **BENDIX France, 126, rue de Stalingrad,
F-93700 Drancy (FR)**

(72) Inventeur: **Cheron, Jean-Marc, 7 rue Maincourt
Résidence la Pommeraie, F-77230 Longperrier (FR)**
Inventeur: **Carre, Jean-Jacques, 59 Boulevard de l'Est,
F-93340 Le Raincy (FR)**

(74) Mandataire: **Poidatz, Emmanuel et al, Service Brevets
Bendix 44 rue François 1er, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention a pour objet un correcteur de freinage interposable entre une source de pression hydraulique et un circuit de freinage de véhicule automobile.

L'invention se rapporte plus particulièrement à un correcteur du type comportant un boîtier pourvu d'au moins un alésage, un piston hydraulique simple ou différentiel coulissant dans ledit alésage et y délimitant une première et une seconde chambre de pression susceptibles d'être reliées à la source de pression et au circuit de freinage, respectivement, le mouvement dudit piston contrôlant l'écoulement d'un fluide sous pression entre lesdites chambres, et un dispositif de commande susceptible d'engendrer un effort pilote sur le piston hydraulique pour solliciter celui-ci vers l'intérieur du corps dans le sens de l'établissement de l'écoulement de fluide, le fluide sous pression engendrant un effort de réaction sollicitant le piston vers l'extérieur du corps dans le sens de l'interruption de l'écoulement de fluide.

Un tel correcteur de freinage est notamment décrit, et son rôle ainsi que son mode de fonctionnement expliqués, dans la demande de brevet d'invention français N° 77-07361 (FR-A-2 383 048) déposée le 11 mars 1977 par la demanderesse. Dans ce document, l'effort pilote est engendré par un dispositif de commande formé d'un levier appliquant un effort sur le piston hydraulique en fonction de la charge du véhicule, définissant ainsi une pression dite de coupure déterminée par les caractéristiques du correcteur lorsque l'effort de réaction dépasse l'effort pilote, pression de coupure pour laquelle l'écoulement de fluide est interrompu entre les deux chambres.

Lorsque le dispositif de commande comporte une pièce coulissante par rapport au boîtier en vue d'appliquer l'effort pilote sur le piston hydraulique, un blocage de la pièce coulissante peut intervenir par exemple à la suite d'un arrêt prolongé du véhicule correspondant à une position de ladite pièce coulissante maintenant le piston hydraulique dans une position telle que la communication entre les deux chambres est maintenue. Dans ce cas, lors de l'application des freinages, l'effort de réaction engendré sur le piston hydraulique ne sera pas à même de repousser la pièce coulissante et par conséquent l'écoulement de fluide ne pourra être interrompu au moment voulu. Le blocage de la pièce coulissante peut par exemple intervenir du fait d'un joint d'étanchéité en caoutchouc placé entre le boîtier et la pièce coulissante et qui présenterait un «collage» des deux pièces, comme cela est bien connu de l'homme de l'art.

Ce problème est encore accentué dans le cas où la pièce coulissante est un vérin soumis à une pression variable en fonction de la charge du véhicule. En effet, outre le problème du «collage» la pression variable peut être fournie par de l'air assurant la suspension du véhicule, air qui peut être soit pollué, ce qui favoriserait l'encrassement des zones de coulissement, soit porteur d'eau, ce qui favorise soit la corrosion soit un blocage de la pièce coulissante en cas de gel.

Un tel blocage de la pièce coulissante, et corrélativement l'impossibilité dans laquelle se trouve le correcteur pour interrompre l'écoulement de fluide, peut provoquer la perte du contrôle du véhicule par blocage prématuré des roues arrière et ceci d'autant plus facilement dans le cas où le véhicule est faiblement chargé.

La présente invention se donne pour but de corriger ce défaut, et elle propose à cet effet que, dans un correcteur de freinage du type rappelé ci-dessus, soit prévu un dispositif de surveillance de l'effort pilote susceptible de limiter celui-ci lorsque l'effort de réaction dépasse l'effort pilote d'une valeur prédéterminée.

Dans une forme préférentielle de réalisation de l'invention, le dispositif de surveillance placé entre le poussoir coulissant et le piston hydraulique, assure une liaison mécanique entre ces deux pièces dans les conditions normales de fonction mais est susceptible d'interrompre cette liaison mécanique, et donc de permettre l'interruption de l'écoulement de fluide lorsque l'effort de réaction dépasse l'effort pilote d'une valeur prédéterminée.

On obtient ainsi une sécurité de fonctionnement du dispositif assurant l'interruption de l'écoulement du fluide même lorsque la pièce coulissante est momentanément ou définitivement bloquée et donc on évite tout blocage prématuré des roues arrière.

Les caractéristiques et avantages de l'invention apparaîtront plus clairement à la lecture de la description suivante d'une forme préférentielle de réalisation appliquée au cas d'un compensateur de freinage pour double circuit de freinage comportant un dispositif de commande asservi à la charge du véhicule au travers d'une pression pneumatique de suspension, donnée à simple titre d'exemple illustratif et en se référant aux dessins annexés dans lesquels:

— la Fig. 1 est une coupe d'un compensateur de freinage équipé du dispositif de l'invention, et représenté en position d'actionnement des freins;
— la Fig. 2 est une vue similaire à la Fig. 1 dans laquelle après blocage de la pièce coulissante, le dispositif de surveillance a été mis en œuvre.

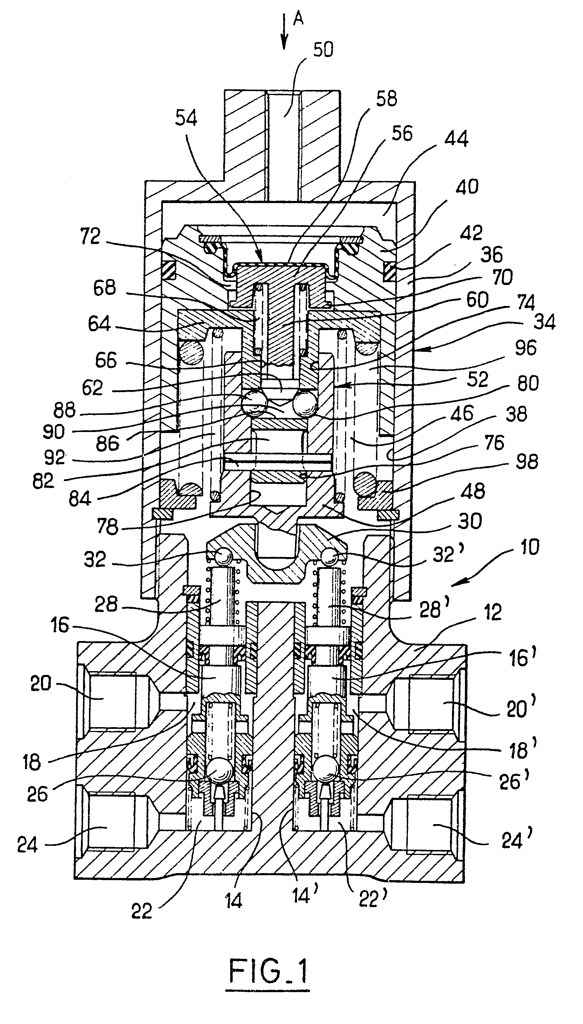

Le correcteur de freinage, désigné dans son ensemble par la référence 10, comporte un boîtier 12 dans lequel sont formés deux alésages parallèles 14 et 14'. Ces deux alésages 14 et 14' reçoivent chacun un piston 16 et 16' respectivement, étagé, susceptible de coulisser de façon étanche par rapport au boîtier 12. Ces pistons 16 et 16' délimitent dans l'alésage correspondant une première chambre 18 et 18' susceptible d'être reliée à une source de pression de fluide (non représentée) au travers d'orifices d'alimentation 20 et 20' respectivement. Les pistons 16 et 16' délimitent chacun une seconde chambre 22 et 22 ' définie entre le fond de l'alésage et le piston correspondant, et susceptibles d'être reliées à un circuit de freinage (non représenté), par exemple les roues arrière du véhicule, au travers d'orifices de sortie 24 et 24'. D'une façon conventionnelle, les pistons 16 et 16' comportent une soupape désignée dans son ensemble par la référence 26 et 26' susceptible de mettre en communication les chambres 18 et 22 ou 18' et 22' suivant la position occupée par les pistons 16 et 16' par rapport au boîtier 12. La Fig. 1 représente les pistons 16 et 16' dans une position fermée des soupapes. Les pistons hydrauliques 16 et 16' présentent des extrémités 28 et 28' qui se projettent hors des alésages 14 et 14' et sur lesquelles vient en appui un palonnier 30 au travers d'éléments présentant des surfaces sphériques 32 et 32'.

Dans le mode de réalisation représenté, les pistons hydrauliques 16 et 16' sont étagés de manière à ce que le correcteur de freinage 10 fonctionne en compensateur, c'est-à-dire qu'après fermeture des soupapes toute augmentation de pression dans les premières chambres 18 et 18' entraîne une augmentation de pression moindre dans les chambres 22 et 22' d'une manière bien connue de l'homme de l'art.

Dans le mode de réalisation représenté, le palonnier 30 est susceptible d'être actionné par un dispositif de commande désigné dans son ensemble par la référence 34. Ce dispositif de commande 34 comporte un corps 36 dans lequel est formé un alésage 38 se terminant à une de ses extrémités par une portion taraudée se vissant sur le boîtier 12 du correcteur. Le corps 38 reçoit de manière coulissante un piston 40 comportant un joint 42 délimitant dans le corps 34 deux chambres étanches entre elles 44 et 46. Le piston 40, formant poussoir pilote du dispositif de commande, est susceptible de coopérer avec le palonnier 30 au travers d'un poussoir 48. Le piston 40 et le poussoir 48 forment ainsi un vérin pilote susceptible d'être soumis à une pression régnant dans la chambre 44 reliée à une source de pression au moyen de l'orifice 50. La chambre 46 est reliée à l'atmosphère.

Conformément à l'invention, le dispositif de commande 34 comporte un dispositif de surveillance désigné dans son ensemble par la référence 52. Ce dispositif de surveillance 52 comporte un vérin de surveillance 54 monté concentriquement au piston 40 et à l'intérieur de celui-ci, et formé par un piston de surveillance 56 et une membrane étanche 58 fixée d'une part dans le piston 40 et s'appuyant dans sa partie centrale sur le piston de surveillance 56 assurant ainsi l'étanchéité entre les chambres 44 et 46 déjà délimitées par le piston 40. Le piston de surveillance 56 se prolonge par un plongeur 60 dont l'extrémité libre, tournée vers le palonnier 30, se termine par une portion conique 62. Le piston pilote 40 porte une pièce intermédiaire 64 solidaire du piston 40 et comportant un alésage en gradins 66 assurant le guidage du plongeur 60 au niveau de son extrémité conique 62, et recevant un ressort 68 placé entre un épaulement formé par l'alésage en gradins et le piston de surveillance de manière à solliciter celui-ci en éloignement du palonnier 30. Le piston de surveillance 56 comporte une collerette 70 limitant les déplacements axiaux du piston de surveillance 56 entre d'une part la pièce intermédiaire 64, et d'autre part un épaulement 72 formé dans le piston 40. La pièce intermédiaire 64 se prolonge en direction du palonnier 30 et forme deux surfaces cylindriques concentriques 74 et 76 de diamètre différent, ces deux surfaces 74 et 76 étant montées de façon coulissante dans un alésage à gradins 78 formé à l'intérieur du poussoir 48. Au niveau du raccordement des deux diamètres de l'alésage en gradins 78 est formée une portion tronconique 80. Dans la partie de petit diamètre du prolongement de la pièce intermédiaire 64 est formée une lumière oblongue 82 à travers laquelle passe une goupille élastique 84 solidaire du poussoir 48. En outre, au niveau du changement de diamètre du prolongement de la pièce intermédiaire 64, est formée une ouverture 86 sous la forme d'un perçage cylindrique dans lequel sont montées librement deux billes 88 formant éléments de blocage. Les deux billes définissent entre elles un espace 90 dans lequel pénètre l'extrémité conique 62 du plongeur 60. Les billes 88 sont ainsi maintenues entre la portion tronconique 80 du poussoir 48 et l'extrémité conique 62 du plongeur 60. Un élément élastique 92 formé par un ressort maintient le poussoir 48 écarté de la pièce intermédiaire 64 dans les limites autorisées par la lumière 82 et la goupille élastique 84. Enfin, l'ensemble vérin pilote est sollicité en écartement du palonnier 30 au moyen d'un ressort 96 placé entre la pièce intermédiaire 64 et une pièce d'appui 98 solidaire du corps 36 du dispositif de commande 34.

Le correcteur qui vient d'être décrit à l'aide de la Fig. 1 fonctionne de la manière suivante:

Tel que représenté, le correcteur de freinage est dans la position où l'écoulement de fluide entre les chambres 18 et 22 d'une part, et 18' et 22' d'autre part, est interrompu, c'est-à-dire que l'effort pilote engendré par le vérin pilote 40-48 est juste équilibré par les efforts de réaction hydrauliques développés par les pistons 16 et 16' à l'encontre de l'effort pilote. L'effort pilote est dirigé dans le sens de la flèche A de la Fig. 1 et les efforts de réaction ont la direction opposée.

En fonctionnement normal, la pression régnant dans la chambre 44 est également appliquée au vérin de surveillance 54. Cet effort est transmis au plongeur 60 et donc à son extrémité 62, qui sollicite en écartement les deux billes 88 en appui sur la portion tronconique 80 du poussoir 48. Dans ces conditions, le poussoir 48 est solidaire du piston 40 au travers des billes 88 et de la pièce intermédiaire 64, assurant ainsi une liaison mécanique entre le dispositif de commande et les pistons hydrauliques 16 et 16' au travers du palonnier 30.

D'une manière conventionnelle, si le freinage est relâché, c'est-à-dire lorsque dans les chambres 18 et 18' la pression hydraulique baisse, dans un premier temps le liquide hydraulique repoussera les billes 26 et 26' permettant au fluide de passer de la chambre 22 à la chambre 18. Dans un deuxième temps, l'effort pilote étant supérieur à l'effort de réaction, le palonnier 30 repoussera les deux pistons 16 et 16' vers le fond des alésages 14 et 14' et les soupapes seront ouvertes d'une manière conventionnelle au moyen des poussoirs associés au corps 12.

Lorsqu'on appliquera de nouveau le freinage, les

soupapes étant dans leur position ouverte, le fluide s'écoulera de la chambre 18 (18') à la chambre 22 (22') jusqu'à ce que l'effort de réaction hydraulique appliqué aux pistons 16 et 16' équilibre l'effort pilote engendré par le vérin pilote 40-48. Les pistons hydrauliques et le piston de commande 40 se déplaceront dans le sens inverse de la flèche A pour atteindre la position représentée sur la Fig. 1.

Dans la partie de fonctionnement qui vient d'être décrite, on a vu que le piston pilote 40 s'est déplacé dans le sens de la flèche A lorsque le freinage a été relâché. Si pour une raison quelconque, par exemple collage par corrosion entre le piston 40 et le corps 36, le piston 40 est bloqué dans cette position qui correspond à un écoulement libre du fluide entre les chambres 18 et 22 ou bien 18' et 22', toute augmentation de pression dans les chambres 18, 22, 18' et 22' engendre des efforts de réaction dirigés dans le sens inverse de la flèche A. Les efforts de réaction atteignent à un moment donné la valeur pour laquelle l'écoulement de fluide doit être interrompu. Mais dans l'impossibilité de repousser le vérin pilote du fait de son blocage, les pistons hydrauliques 16 et 16' restent en place et la pression augmente dans les chambres 22 et 22' alors que l'écoulement de fluide aurait dû être interrompu. Cet accroissement de pression dans les chambres 22 et 22' correspond à un accroissement dans les freins arrière du véhicule et par conséquent, peut engendrer le blocage de celles-ci avec les risques que cela comporte.

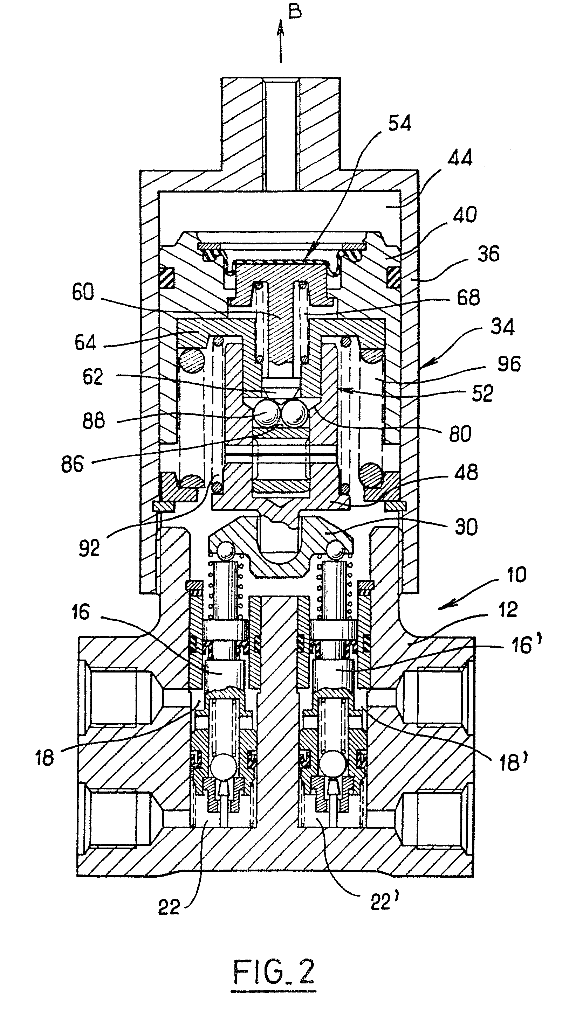

On a représenté sur la Fig. 2, le correcteur de freinage 10 dans lequel le piston 40 a été bloqué par rapport au corps 36 du dispositif de commande 34 dans une position où normalement, le vérin pilote maintient les pistons hydrauliques dans une position telle que les soupapes sont normalement ouvertes en permanence.

Sur cette Fig. 2, le dispositif de surveillance a été mis en œuvre, en effet les efforts de réaction engendrés dans le sens de la flèche B de la Fig. 2 au travers du palonnier 30 ont appliqué un effort de réaction sur le poussoir 48 supérieur à l'effort pilote qui aurait dû être normalement engendré par le piston pilote 40. Dans ces conditions, le dispositif de surveillance 52 voit d'une part, l'effort de réaction dirigé dans le sens de la flèche B et d'autre part, le vérin de surveillance développe un effort dans le sens inverse de la flèche B qui correspond à la pression régnant dans la chambre 44. Le piston 40 étant bloqué, l'effort de réaction augmente sans pouvoir déplacer les pistons 16 et 16' jusqu'à ce que la portion tronconique 80 portée par le poussoir 48 développe un effort dans le sens du rapprochement des deux billes 88 et ceci jusqu'à ce que ces billes 88 repoussent l'extrémité conique 62 du plongeur 60 dans le sens de la flèche B à l'encontre de l'effort développé par le vérin de surveillance 54. Lorsque les billes 88 sont suffisamment rapprochées, le plongeur 60 prend une position non opérante comme représenté sur la Fig. 2, et les deux billes 88 toujours guidées par l'ouverture 86 se rapprochent suffisamment pour permettre le coulissement relatif entre le poussoir 48 et la pièce intermédiaire 64, permettant ainsi au palonnier 30 et aux pistons 16 et 16' de se déplacer dans le sens de la flèche B et provoquer la fermeture des soupapes portées par les deux pistons 16 et 16'. On a ainsi supprimé la liaison mécanique entre le dispositif de commande et les pistons hydrauliques.

Si dans ces conditions, la pression de freinage est relâchée, c'est-à-dire que les pressions baissent dans les chambres 18 et 18', dans un premier temps les soupapes portées par les pistons 16 et 16' s'ouvriront du fait d'une pression différentielle pour assurer une chute de pression dans les chambres 22 et 22' et dans un deuxième temps, le ressort 92 en repoussant le poussoir 48 dans le sens inverse de la flèche B assurera l'ouverture permanente des soupapes de piston mais également remettra le poussoir 48 par rapport à la pièce intermédiaire 64 dans une position relative telle que représentée sur la Fig. 1, et l'effort exercé par le vérin de surveillance 54 sur le plongeur 60 remettra celui-ci et les billes 88 dans la position initiale telle que représentée sur la Fig. 1.

Cette remise en position initiale du dispositif de surveillance est particulièrement importante dans le cas où le piston 40 a été bloqué par de l'eau gelée, celle-ci étant susceptible de fondre, le correcteur peut fonctionner de nouveau normalement.

Il est bien évident que pour que le dispositif de surveillance soit efficace, la section efficace du vérin de surveillance 54, l'effort du ressort 68 et les pentes des portions coniques 62 et 80 du plongeur 60 et du poussoir 48 respectivement, seront définis de manière à ce que le dispositif de surveillance soit mis en œuvre pour une différence entre effort pilote et effort de réaction prédéterminée et comprise entre 5 et 15% de la valeur de l'effort pilote.

Ce correcteur de freinage est particulièrement bien adapté à être associé à une suspension pneumatique de véhicule, et dans ce cas, la chambre 44 est directement reliée à la pression de suspension du véhicule, et par conséquent, cette pression varie en fonction de la charge du véhicule et donc les pressions de coupure du correcteur dépendront également de la charge du véhicule.

On comprendra aisément que le ressort 96 peut être plus ou moins comprimé par vissage du corps 36 sur le boîtier 12, permettant ainsi un préréglage correct du correcteur.

Il est bien entendu que l'invention n'est pas limitée au mode de réalisation représenté, en particulier le correcteur peut être un correcteur à simple piston hydraulique du type limiteur de pression et bien évidemment il peut ne comporter qu'un seul et unique piston hydraulique. De même, la chambre 44 peut être alimentée avec une pression constante pneumatique ou bien une pression hydraulique variable ou non. De même, la structure du dispositif de commande peut subir des modifications sans sortir du cadre de la présente invention.

## Revendications

1. Correcteur de freinage (10) interposable entre une source de pression hydraulique et un circuit de freinage de véhicule automobile, du type comportant un boîtier (12) pourvu d'au moins un alésage (14, 14'), un piston hydraulique (16, 16') simple ou différentiel coulissant dans ledit alésage (14, 14') et y délimitant une première (18, 18') et une seconde (22, 22') chambre de pression susceptibles d'être reliées à la source de pression et au circuit de freinage, respectivement, le mouvement dudit piston (16, 16') contrôlant l'écoulement d'un fluide sous pression entre lesdites chambres, un dispositif de commande (34) susceptible d'engendrer un effort pilote sur ledit piston hydraulique (16, 16') pour solliciter celui-ci vers l'intérieur du boîtier (12) dans le sens de l'établissement dudit écoulement de fluide, ledit fluide sous pression engendrant un effort de réaction sollicitant ledit piston (16, 16') vers l'extérieur du boîtier dans le sens de l'interruption de l'écoulement de fluide, caractérisé en ce que ledit dispositif de commande (34) comporte un dispositif de surveillance (52) dudit effort pilote susceptible de limiter celui-ci lorsque l'effort de réaction dépasse l'effort pilote d'une valeur prédéterminée.

2. Correcteur de freinage selon la revendication 1, caractérisé en ce que ledit dispositif de surveillance (52) est interposé entre un poussoir pilote (40) du dispositif de commande (34) et ledit piston hydraulique (16, 16').

3. Correcteur de freinage selon la revendication 2, caractérisé en ce que ledit dispositif de surveillance (52) comporte un plongeur (60) maintenu dans une position opérante lorsque l'effort pilote excède l'effort de réaction augmenté d'une valeur prédéterminée assurant une liaison mécanique entre le dispositif de commande (34) et le piston hydraulique (16, 16'), ledit plongeur (60) étant susceptible de prendre une position non opérante lorsque l'effort de réaction excède ledit effort pilote augmenté d'une valeur prédéterminée supprimant ainsi la liaison mécanique entre le dispositif de commande (34) et le piston hydraulique (16, 16').

4. Correcteur de freinage selon la revendication 3, caractérisé en ce que ledit plongeur (60) comporte une extrémité conique (62) écartant, en position opérante, deux éléments de blocage (88) qui en coopérant avec un poussoir (48) associé au piston hydraulique (16, 16') transmettent à celui-ci l'effort pilote, lesdits deux éléments de blocage (88) étant susceptibles de faire prendre au plongeur (60) ladite position non opérante lorsque l'effort sur ledit poussoir (60) engendré par l'effort de réaction excède l'effort pilote augmenté de la valeur prédéterminée.

5. Correcteur de freinage selon l'une des revendications précédentes, caractérisé en ce que le dispositif de commande (34) comporte un vérin pilote (40-48) formant le poussoir pilote et en ce que ledit dispositif de surveillance (52) comporte un vérin de surveillance (54) soumis à la même pression pilote.

6. Correcteur de freinage selon la revendication 5, caractérisé en ce que ledit vérin de surveillance (54) coopère avec ledit plongeur (60) pour maintenir celui-ci en position opérante tant que l'effort de réaction n'excède pas l'effort pilote augmenté de la valeur prédéterminée.

7. Correcteur de freinage selon la revendication 6, caractérisé en ce que le poussoir (48) comporte une portion tronconique (80) sur laquelle sont pressés lesdits éléments de blocage (88) au moyen de l'extrémité conique (62) dudit plongeur (60) assurant ainsi la solidarisation entre ledit poussoir (48) et ledit poussoir pilote (40), lesdits éléments de blocage (88) étant susceptibles d'échapper à ladite portion tronconique (80) en repoussant l'extrémité conique (62) du plongeur (60) désolidarisant ainsi le poussoir (48) et le poussoir pilote (40) lorsque l'effort de la portion tronconique (80) sur les éléments de blocage (88) engendré par l'effort de réaction excède l'effort engendré sur les éléments de blocage (88) par l'extrémité conique (62) du plongeur (60).

8. Correcteur de freinage selon la revendication 7, caractérisé en ce que lesdits éléments de blocage (88) sont formés par des billes guidées dans une ouverture (86) formée dans le vérin pilote (40-48) et coopèrent avec la portion tronconique (80) de part et d'autre de l'ouverture (86) et avec l'extrémité conique (62) du plongeur (60) dans un espace (90) séparant les deux billes (88).

9. Correcteur de freinage selon la revendication 8, caractérisé en ce que ledit poussoir (48) est monté de façon télescopique sur le poussoir pilote (40) permettant de rompre la liaison mécanique entre poussoir (48) et poussoir pilote (40).

10. Correcteur de freinage selon la revendication 9, caractérisé en ce que le correcteur (10) est un correcteur pour double circuit de freinage comportant deux pistons hydrauliques parallèles (16, 16') montés dans deux alésages (14, 14') du boîtier (12), le poussoir (48) étant complété par un palonnier (30) assurant la répartition des efforts entre les deux pistons hydrauliques (16, 16') et recevant de ceux-ci les efforts de réaction correspondants.

11. Correcteur de freinage selon l'une des revendications 9 ou 10, caractérisé en ce que le plongeur (60) reprend sa position opérante lorsque l'effort de réaction redevient inférieur à l'effort pilote au moyen d'un élément élastique (92) qui écarte ledit poussoir pilote (40) et ledit poussoir (48).

12. Correcteur de freinage selon l'une des revendications 9 à 11, caractérisé en ce que le vérin de surveillance (54) est placé concentriquement à l'intérieur du vérin pilote (40-64-48).

13. Correcteur de freinage selon l'une des revendications 5 à 12, caractérisé en ce que ladite pression pilote varie en fonction de la charge du véhicule.

## Claims

1. A brake regulator (10) adapted to be interposed between a hydraulic pressure source and an automotive vehicle brake system, of the type comprising a casing (12) provided with a least one bore (14, 14'), a hydraulic simple or differential piston (16, 16') sliding in said bore (14, 14') and delimiting first (18, 18') and second (22, 22') pressure chambers adapted to be connected to the pressure source and the brake system, respectively, the movement of said piston (16, 16') controlling the flow of a pressure fluid between said chambers, a control device (34) being adapted to generate a pilot force upon said hydraulic piston (16, 16') for urging the latter towards the interior of the casing (12) in the sense of establishing said fluid flow, said pressure fluid generating a reaction force urging said piston (16, 16') towards the exterior of the casing in the sense of interrupting the fluid flow, characterized in that the control device (34) comprises a device (52) for monitoring said pilot force adapted to limit the latter when the reaction force exceeds the pilot force by a predetermined value.

2. Brake regulator according to claim 1, characterized in that said monitoring device (52) is interposed between a pilot slide (40) of the control device (34) and said hydraulic piston (16, 16').

3. Brake regulator according to claim 2, characterized in that said monitoring device (52) comprises a plunger (60) maintained in an operative position when the pilot force exceeds the reaction force increased by a predetermined value to ensure a mechanical connection between the control device (34) and the hydraulic piston (16, 16'), said plunger (60) being adapted to assume a non-operative position when the reaction force exceeds said pilot force increased by a predetermined value thereby to cancel the mechanical connection between the control device (34) and the hydraulic piston (16, 16').

4. Brake regulator according to claim 3, characterized in that said plunger (60) comprises a conical extremity (62) which, when in the operative position, spaces two locking members (88) which transfer the pilot force to the hydraulic piston (16, 16') when cooperating with a slide (48) associated to the hydraulic piston, said locking members (88) being adapted to make the plunger (60) assume said non-operative position when the force upon the plunger (60) generated by a reaction force exceeds the pilot force increased by the predetermined value.

5. Brake regulator according to any of the preceding claims, characterized in that the control device (34) comprises a pilot motor (40-48) forming said pilot slide, and in that said monitoring device (52) comprises a monitoring motor (54) subjected to the same pilot pressure.

6. Brake regulator according to claim 5, characterized in that said monitoring motor (54) cooperates with said plunger (60) for maintaining the latter in the operative position as long as the reaction force does not exceed the pilot force increased by the predetermined value.

7. Brake regulator according to claim 6, characterized in that the slide (48) comprises a truncated portion (80) against which said locking members (88) are urged by means of the conical extremity (62) of said plunger (60) thereby ensuring the connection between said slide (48) and said pilot slide (40), said locking members (88) being adapted to remove from said truncated portion (80) by pushing back the conical extremity (62) of the plunger (60) thereby having the slide (48) and the pilot slide (40) disengage when the force of the truncated portion (80) upon the locking members (88) generated by the reaction force exceeds the force exerted on the locking members (88) by the conical extremity (62) of the plunger (60).

8. Brake regulator according to claim 7, characterized in that said locking members (88) are comprised of balls guided in an opening (86) formed in the pilot motor (40-48) and cooperate with the truncated portion (80) on opposite sides of the opening (86) and with the conical extremity (62) of the plunger (60) in a space (90) separating the two balls (88).

9. Brake regulator according to claim 8, characterized in that said slide (48) is telescopically mounted on the pilot slide (40) permitting to interrupt the mechanical connection between the slide (48) and the pilot slide (40).

10. Brake regulator according to claim 9, characterized in that the regulator (10) is a regulator for a double-brake circuit comprising two parallel hydraulic pistons (16, 16') mounted in two bores (14, 14') of the casing (12), the slide (48) being completed by a balancing member (30) assuring the division of forces between the two hydraulic pistons (16, 16') and receiving from the latter the corresponding reaction forces.

11. Brake regulator according to claim 9 or claim 10, characterized in that the plunger (60) resumes its operative position when the reaction force again becomes smaller than the pilot force by means of a resilient member (92) which moves apart said pilot slide (40) and said slide (48).

12. Brake regulator according to any of claims 9 to 11, characterized in that the monitoring motor (54) is placed concentrically within the pilot motor (40-64-48).

13. Brake regulator according to any of claims 5 to 12, characterized in that said pilot pressure varies in response to the vehicle charge.

**Patentansprüche**

1. Bremsregler (10), der zwischen einer hydraulischen Druckquelle und einen Kraftfahrzeug-Bremskreis einsetzbar ist, mit einem Gehäuse (12), das mit mindestens einer Bohrung (14, 14') versehen ist, einem hydraulischen Einfach- oder Stufenkolben (16, 16'), der in der Bohrung (14, 14') gleitet und darin eine erste (18, 18') und zweite (22, 22') Druckkammer begrenzt, die an der Druckquelle bzw. am Bremskreis anschliessbar sind, wobei die Bewegung des Kolbens (16, 16') die Strömung eines Druckmittels zwischen den Kammern steuert, einer Steuervorrichtung (34), die eine Steuerkraft auf den hydraulischen Kolben (16, 16') ausübt, um diesen in das Innere des Gehäuses (12) im Sinne einer Herstellung der Strömungsverbindung vorzuspannen, wobei das Druckmittel eine Reaktionskraft erzeugt, die den Kolben (16, 16') in Richtung aus dem Gehäuse heraus im Sinne einer Unterbrechung der Strömungsverbindung vorspannt, dadurch gekennzeichnet, dass die Steuervorrichtung (34) eine Überwachungseinrichtung (52) zum Überwachen der Vorsteuerkraft aufweist, um diese zu begrenzen, wenn die Reaktionskraft die Vorsteuerkraft um einen vorgegebenen Wert übersteigt.

2. Bremsregler nach Anspruch 1, dadurch gekennzeichnet, dass die Überwachungsvorrichtung (52) zwischen einen Vorsteuerschieber (40) der Steuervorrichtung (34) und den hydraulischen Kolben (16, 16') eingesetzt ist.

3. Bremsregler nach Anspruch 2, dadurch gekennzeichnet, dass die Überwachungsvorrichtung (52) einen Plunger (60) aufweist, der in einer Betriebsstellung gehalten wird, wenn die Vorsteuerkraft die um einen vorgegebenen Wert erhöhte Reaktionskraft übersteigt, wodurch eine mechanische Verbindung zwischen der Steuervorrichtung (34) und dem hydraulischen Kolben (16, 16') sichergestellt wird, wobei der Plunger (60) eine Ausserbetriebsstellung einnehmen kann, wenn die Reaktionskraft die um einen vorgegebenen Wert erhöhte Vorsteuerkraft übersteigt, wodurch auf diese Weise die mechanische Verbindung zwischen der Steuervorrichtung (34) und dem hydraulischen Kolben (16, 16') unterbunden wird.

4. Bremsregler nach Anspruch 3, dadurch gekennzeichnet, das der Plunger (60) ein konisches Ende (62) aufweist, das in der Betriebsstellung zwei Sperrglieder (88) auf Abstand zueinander hält, die durch Zusammenwirken mit einem dem hydraulischen Kolben (16, 16') zugeordneten Schieber (48) auf diesen die Vorsteuerkraft übertragen, wobei die beiden Sperrglieder (88) bewirken, dass der Plunger (60) seine Ausserbetriebsstellung einnimmt, wenn die durch die Reaktionskraft erzeugte Kraft auf den Schieber (60) die um den vorgegebenen Wert erhöhte Vorsteuerkraft übersteigt.

5. Bremsregler nach einem der vorhergehenden Ansprüche, dadurch gekennzeichnet, dass die Vorsteuereinrichtung (34) einen Vorsteuermotor (40-48) aufweist, der den Vorsteuerschieber bildet, und dass die Überwachungsvorrichtung (52) einen Überwachungsmotor (54) aufweist, der dem gleichen Vorsteuerdruck ausgesetzt ist.

6. Bremsregler nach Anspruch 5, dadurch gekennzeichnet, dass der Überwachungsmotor (54) mit dem Plunger (60) zusammenwirkt, um diesen in der Betriebsstellung zu halten, solange die Reaktionskraft die um den vorgegebenen Wert erhöhte Vorsteuerkraft nicht übersteigt.

7. Bremsregler nach Anspruch 6, dadurch gekennzeichnet, dass der Schieber (48) einen kegelstumpfförmigen Abschnitt (80) aufweist, gegen den die Sperrglieder (88) mittels des konischen Endes (62) des Plungers (60) gedrückt werden, wodurch die Verbindung zwischen dem Schieber (48) und dem Vorsteuerschieber (40) sichergestellt wird, wobei die Sperrglieder (88) sich von dem kegelstumpfförmigen Abschnitt (80) lösen können, indem sie das konische Ende (62) des Plungers (60) zurückstossen, wodurch der Schieber (48) und der Vorsteuerschieber (40) voneinander getrennt werden, wenn die vom kegelstumpfförmigen Abschnitt (80) auf die Sperrglieder (88) ausgeübte Kraft, welche durch die Reaktionskraft erzeugt wird, die Kraft übersteigt, welche von dem konischen Ende (62) des Plungers (60) auf die Sperrglieder (88) ausgeübt wird.

8. Bremsregler nach Anspruch 7, dadurch gekennzeichnet, dass die Sperrglieder (88) von Kugeln gebildet werden, die in einer im Vorsteuermotor (40-48) gebildeten Öffnung (86) geführt sind, und mit dem kegelstumpfförmigen Abschnitt (80) beidseitig zur Öffnung (86) sowie mit dem konischen Ende (62) des Plungers (60) in einem die beiden Kugeln (88) trennenden Raum (90) zusammenwirken.

9. Bremsregler nach Anspruch 8, dadurch gekennzeichnet, dass der Schieber (48) teleskopierbar auf dem Vorsteuerschieber (40) gelagert ist, wodurch die mechanische Verbindung zwischen dem Schieber (48) und dem Vorsteuerschieber (40) unterbrochen werden kann.

10. Bremsregler nach Anspruch 9, dadurch gekennzeichnet, dass der Bremsregler (10) ein Regler für eine Zweikreisbremsanlage ist, welche zwei parallele hydraulische Kolben (16, 16') aufweist, die in zwei Bohrungen (14, 14') des Gehäuses (12) gelagert sind, wobei der Schieber (48) durch einen Ausgleichskörper (30) vervollständigt wird, der die Verteilung der Kräfte zwischen den beiden hydraulischen Kolben (16, 16') sicherstellt und von diesen die entsprechenden Reaktionskräfte empfängt.

11. Bremsregler nach Anspruch 9 oder 10, dadurch gekennzeichnet, dass der Plunger (60) seine Betriebsstellung wieder einnimmt, wenn die Reaktionskraft wieder kleiner als die Vorsteuerkraft wird, und zwar mittels eines elastischen Teils (92), das den Vorsteuerschieber (40) und den Schieber (48) voneinander entfernt.

12. Bremsregler nach einem der Ansprüche 9-11, dadurch gekennzeichnet, dass der Überwachungsmotor (54) konzentrisch im Inneren des Vorsteuermotors (40-64-48) angeordnet ist.

13. Bremsregler nach einem der Ansprüche 5-12, dadurch gekennzeichnet, dass der Vorsteuerdruck sich in Abhängigkeit von der Fahrzeugbeladung ändert.

FIG_1

FIG.2